# EUROPEAN PATENT APPLICATION

(11) **EP 3 147 335 A1**
(43) Date of publication of application: **29.03.2017**
(21) Application number: 15186527.6
(22) Date of filing: 23.09.2015
(51) Int. Cl.: C09D 11/326, C08F 8/44, C08F 293/00, C08L 33/02, C08L 53/00

(54) **COLORANT COMPOSITIONS CONTAINING WETTTING AND/OR DISPERSING AGENTS WITH LOW AMINE NUMBER**

(71) Applicant: BYK-Chemie GmbH, 46483 Wesel (DE)
(72) Inventor: OKKEL, Andreas, 46483 Wesel (DE); GÖBELT, Bernd, deceased (DE); BESSEL, Michael, 46483 Wesel (DE); YONEHARA, Hiroshi, Hyogo 663-8173 (JP); FRANK, Albert, 46483 Wesel (DE)
(74) Representative: Leifert & Steffan

(57) **Abstract**

The invention relates to a composition comprising at least one wetting and/or dispersing agent (A), at least one colorant (B), and at least one solvent (C), wherein the wetting and/or dispersing agent (A) is a diblock copolymer, the first block of said diblock copolymer consisting of one or more identical or different repeating units 1 and the second block of said diblock copolymer comprising one or more identical or different repeating units 2 and one or more identical or different repeating units 3, wherein the amine number of the diblock copolymer is in the range of from 0.1 to 48.0 mg KOH/g copolymer, and the relative weight ratio of the first block to the second block is in the range of from 90:10 to 50:50.

## Description

The invention relates to a composition comprising at least one wetting and/or dispersing agent (A), at least one colorant (B), and at least one solvent (C), wherein the wetting and/or dispersing agent (A) is a diblock copolymer, the first block of said diblock copolymer consisting of one or more identical or different repeating units 1 and the second block of said diblock copolymer comprising one or more identical or different repeating units 2 and one or more identical or different repeating units 3, wherein the amine number of the diblock copolymer is in the range of from 0.1 to 48.0 mg KOH/g copolymer, and the relative weight ratio of the first block to the second block is in the range of from 90:10 to 50:50.

### State of the art

UV-curing coating materials are used, for example, as color filters in liquid-crystal screens and liquid-crystal displays (LCDs). In this field of application in particular, stringent requirements are imposed on the coloristic properties of the coating material and on its processing properties. In order to attain these stringent requirements, wetting agents and dispersants are used which produce a storage-stable pigment dispersion having a Newtonian flow behavior and a moderate viscosity. Furthermore, the color filter pattern is produced with a photolithographic procedure. In this process, the whole glass panel is coated with the liquid color resist by spin or slid coating. After drying of the coating, the pixel pattern of the color is created by UV-curing of certain parts of the panel using a photo mask and removing the non-cured coating with a developer - a basic aqueous solution that also contains surface-active substances. In this step the color resist has to become water-soluble. The wetting and dispersing agent may not negatively influence this developing step, for example by lengthening the process time or by causing coating particles left on the panel.

Color resists that can be used for manufacturing color filters for liquid-crystal screens and liquid-crystal displays in combination with the Quantum Dot Technology for different kinds of devices such as, for example smartphones, tablet PCs, LCD TVs, PC monitors, notebook PCs. In the last years, it was state of the art to use LEDs as the backlight for LCD displays. Quantum dot LEDs offer key advantages over the phosphors-based technology currently used to create white light from LEDs including superior color performance.

Displays on popular backlit LCD tablets can only express about 20% of the color a human eye can see, while LCD HDTVs can express only about 35%. By augmenting their backlight units (BLUs) with Quantum dot, LCD manufacturers are able to create vivid displays that can exceed 55% of the spectrum a human eye can detect.

As with yttrium aluminum garnet (YAG), Quantum dot backlight technology is easy to integrate with existing LCD manufacturing processes. Quantum dot upgrades require no line retooling or process changes. So manufacturers who have invested billions in LCD plants and equipment can quickly deploy Quantum dot -enhanced LCD panels that offer the color and efficiency of the best organic light emitting diodes (OLEDs) at a fraction of the cost.

JP 2013-053231 discloses a process of preparing AB diblock copolymers by means of group transfer polymerization (GTP) formed from monomers consisting of (meth)acrylic esters in one block and (meth)acrylic esters bearing at least one amino group in the other block. The amino groups are not quaternized. These AB diblock copolymers can be used as wetting and dispersing agents. However, when used in the developing step of the production of photoresists, these copolymers do not promote the removal of the non-cured coating.

JP 2011-232735 A describes a colorant composition including a block copolymer having in one block a repeating unit bearing a tertiary amine group and in the other block a repeating unit represented by polyether (meth)acrylates with an alkyl group consisting of 1 to 6 carbon atoms and a length of polyether in the range from 1 to 150 monomers. The amino groups are not quaternized. The block copolymer dispersants disclosed have an amine value between 50 and 80 mg KOH/g.

JP 2010-134419 A discloses a radiation-sensitive composition including a copolymer containing repeating units bearing tertiary amino groups, repeating units bearing quaternary ammonium salt groups and repeating units represented by polyether (meth)acrylates with an alkyl group consisting of 1 to 5 carbon atoms and a length of polyether in the range from 1 to 20 monomers.

JP 2009-25813 A relates to a use of block copolymers with an amine value in the range from 80 mg KOH/g to 150 mg KOH/g for the preparation of color resists. These block copolymers consist of (meth)acrylic esters, with one block containing repeating units having a non-quaternized amino group and the other block having no amino group containing repeating units, but instead having repeating units represented by poly(ethylene glycol) ethyl ether (meth)acrylates with 1 to 5 repeating units of ethylene glycol.

JP 2009-52010 A relates to a pigment dispersion containing a dispersant, which in turn contains a (meth)acrylic block copolymer having in one block 5 to 40 mol % of a repeating unit represented by poly(ethylene glycol) ethyl ether (meth)acrylates with 1 to 5 repeating units of ethylene glycol and the other block consisting of repeating units represented by (meth)acrylates having tertiary amino groups. The amino groups are not quaternized. The block copolymer dispersants used for preparation of these compositions have an amine value between 80 and 150 mg KOH/g.

The use of such copolymers as wetting agents and/or dispersants as disclosed in the prior art, however, has disadvantages upon incorporation into compositions such as pigment compositions, e.g. with respect to an undesired (i.e. too high) viscosity and thus instability and, further with respect to an only slow removal of the non-cured coating in the developing step.

### Problem

There continues to be a need for improved wetting agents and dispersants, which are able to produce in particular a very low-viscosity, storage-stable pigment concentrate. A very low viscosity of the pigment concentrate and of the color resist is needed for the application of the coating material to the substrate. If the pigment dispersions are not storage-stable and agglomerate, the contrast is impaired. In particular, there is a need for components that have a low intrinsic color, in particular when used as wetting agents or dispersants. Moreover, the wetting agent and dispersant should have no negative influence on the developing step as for modern color filters the pigment loading is increased and therewith also the amount of wetting agent and dispersant needed, which is used for their formulation. Further, there is a need for such improved wetting agents and dispersants, which exhibit only a very low content of chloride anions or hydrolysable chloride as determined by ASTM D1726-11 or a chloride-free: Chloride is suspected to cause several problems in the construction and technical performance of electronic devices and in liquids that come in contact with metal surfaces by undergoing reduction/oxidation reactions, causing corrosion or changing the electrochemical potential of current-carrying materials or layers.

Therefore, an object of the present invention is provide a composition that contains a wetting and dispersing additive containing advantageously only a very low content of chloride or a chloride-free, that leads to an extremely low and stable viscosity of the formulation and improves the speed of the developing step during the color filter production. Additionally, the described wetting and dispersing agents should allow an extremely good stabilization and a very low grind viscosity, especially for blue and green grinds and co-grinds, in particular single- and co-grinds of blue and green pigments such as phthalocyanine-pigments.

### Solution

This object has been solved by the subject-matter of the claims of the present application as well as by the preferred embodiments thereof disclosed in this specification, i.e. by the subject matter described herein.

A first aspect of the present invention is thus a composition comprising
at least one wetting and/or dispersing agent (A),
at least one colorant (B) and
at least one organic solvent (C),
said at least one wetting and/or dispersing agent (A) being a diblock copolymer,
wherein the first block of the diblock copolymer consists of one or more identical or different repeating units 1 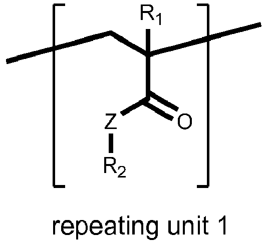 and wherein the second block comprises
i) one or more identical or different repeating units 2, and
ii) one or more identical or different repeating units 3 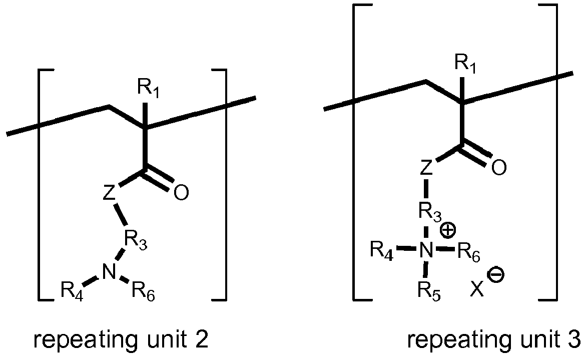
and iii) optionally up to 40 weight-% of repeating units 1, based on the total weight of repeating units in the second block,
wherein
Z is O or NH,
R₁ is H or CH₃,
R₂ is a monoether or polyether radical, a linear or branched alkyl, cycloalkyl, aryl or aralkyl,
R₃ is a linear hydrocarbon chain with 2 to 4 carbon atoms, the linear hydrocarbon chain optionally being interrupted by one or more oxygen atoms and/or having a hydroxyl group attached to the hydrocarbon chain,
R₄ and R₆ independently of one another represent a linear, branched or cyclic, saturated or unsaturated aliphatic group, optionally containing tertiary amino groups and/or hydroxyl groups; an aromatic group; or an araliphatic group; or R₄, R₆ and the nitrogen atom to which both groups are bound form a saturated or unsaturated heterocyclic ring, optionally further containing one or more heteroatoms selected from oxygen and nitrogen as ring atoms,
R₅ is a linear, branched or cyclic, saturated or unsaturated aliphatic group or an araliphatic group, wherein these before-mentioned groups optionally contain one or more hydroxyl groups, one or more ether oxygens and/or one or more ester groups;
X^{θ} is an acid anion,
and residues R₁, R₂, R₃, R₄, R₅, R₆, Z and X^{θ} are each independently of one another identical or different for repeating units 1, 2, and 3,
characterized in that the amine number of the diblock copolymer is in the range of from 0.1 to 48.0 mg KOH/g copolymer, and in that the relative weight ratio of the first block consisting of repeating units 1 to the second block comprising at least repeating units 2 and repeating units 3 and, if present, repeating units 1, is in the range of from 90:10 to 50:50 and in that the diblock copolymer has a weight average molecular weight M_{w} in the range of from 5,000 to 15,000 g/mol.

A second aspect of the present invention is a wetting and/or dispersing agent (A), i.e. a diblock copolymer as defined above in connection with the first aspect of the present invention.

It has been surprisingly found that the use of the diblock copolymers (A) as wetting and/or dispersing agent component in compositions such as pigment concentrates leads to an excellently low and stable viscosity of the pigment concentrates formed and to a higher developing speed for the construction of a photo resist.

Additionally, it has been surprisingly found that the diblock copolymers (A) have no negative influence on the developing step and even a higher developing speed for the construction of a photo resist or color resist is provided.

It has been in particular surprisingly found that an incorporation of a diblock copolymer dispersant having an amine number ≤ 48.0 mg KOH/g copolymer strongly positively affects the viscosity in the grinding step, when a pigment dispersion is produced: the use of copolymer having an amine number ≤ 48.0 mg KOH/g copolymer leads to a significantly lower and more stable viscosity of the pigment dispersion over a certain storage time.

It has been further surprisingly found that an incorporation of quaternary ammonium groups ("quats") in the pigment compatible block of the block copolymer dispersants due to the presence of at least one "repeating unit 3" in the diblock copolymer strongly positively affects the viscosity in the grinding step, when the pigment dispersion is produced: A high amount of quaternization of the amino groups being present in the copolymer leads to a significantly lower and more stable viscosity of the pigment dispersion over a certain storage time. In addition, in particular if for said quaternization of the amino groups of the block copolymer glycidyl compounds (e.g. glycidyl ethers or glycidyl esters) or epoxidized alpha-olefins are used, it has been surprisingly found that the compatibility of the dispersing agent in the resin or ink and its water solubility are strongly positively affected.

Moreover, it has been surprisingly found that the inventively used diblock copolymers (A) exhibit only a very low content of chloride anions or hydrolysable chloride or are chloride-free. This can be in particular achieved when glycidyl ethers or chloride-free epoxide compounds with terminal epoxide groups exhibiting a very low content of chloride anions or hydrolysable chloride determined by ASTM D1726 - 11. The use of such glycidyl compounds with low chloride content or chloride-free epoxide compounds surprisingly results in dispersing agents that are more broadly applicable in coatings for electronic parts or in printing inks. In such applications, in particular 0 ppm hydrolysable chloride is desired and up to 100 ppm hydrolysable chloride may be tolerated.

### Detailed description of the invention

The inventive composition is preferably a composition for colored layer formation and/or for the preparation of color filters and/or color resists, may be used for the preparation of inkjet inks, and comprises at least one wetting and/or dispersing agent (A) (in the following also referred to as "dispersant"), at least one colorant (B) and at least one organic solvent (C). The composition may contain further components such as at least one resin (D), preferably at least one alkali-soluble resin (D), and/or at least one multi-functional ethylenically unsaturated monomer (E) and/or at least one further component (F).

All preferred embodiments of the wetting and/or dispersing agent (A) disclosed hereinbefore or hereinafter as a constituent of the composition of the invention are also preferred embodiments of the inventive wetting and/or dispersing agent (A) as such.

The term "comprising" in the sense of the present invention, in particular in connection with the composition according to the present invention has in a preferred embodiment the meaning of "consisting of". In this preferred embodiment, in addition to components (A), (B) and (C) one or more further components may be present in the inventive composition such as one or more of components (D) and/or (E) and/or (F). All components can be contained in one of their preferred embodiments described hereinafter in the inventive composition.

The term "poly" as used herein encompasses "oligo". For example, a polyether also encompasses an oligoether.

The inventive compositions are preferably used for coating materials that are curable with actinic radiation, more particularly for UV-curable coating materials. Preferably, the inventive composition is thus a radiation sensitive composition, more preferably an actinically curable, more particularly UV-curable, composition. The inventive composition preferably contains at least one component (E) for this reason. The inventive composition is suitable for the manufacture of color filters and color resists, in particular for liquid-crystal displays and liquid-crystal screens.

The amount of all components being present in the inventive composition adds up to 100 wt.-%. This includes compositions containing only components (A), (B) and (C) and also compositions containing components (A), (B) and (C) and at least one of components (D), (E) and (F).

The compositions according to the present invention comprising (A), (B) and (C), and more preferably further comprising (D) and (E), and most preferably further comprising (F), are preferably non-aqueous. The term "non-aqueous" preferably means that the compositions according to the present invention are most preferably substantially water-free compositions. The term "substantially" in this respect in the sense of the present invention preferably means that the inventive composition does not contain more than 5 wt.-%, more preferably not more than 2.5 wt.-%, even more preferably not more than 1.5 wt.-%, still preferably not more than 1.0 wt.-%, yet more preferably not more than 0.5 wt.-% water, in each case based on the total weight of the composition. In particular, the inventive composition is free of water.

### Wetting and/or dispersing agent (A)

The wetting and/or dispersing agent (A) is a diblock copolymer, preferably a (meth)acrylic diblock copolymer. Herein the diblock copolymer according to the present invention is also called a "copolymer according to the (present) invention" or an "inventive copolymer".

The term "(meth)acrylic" means "acrylic" and/or "methacrylic". Similarly, "(meth)acrylate" means acrylates and/or methacrylates. Therefore, a "(meth)acrylic polymer" in general may be formed from only "acrylic monomers", only "methacrylic monomers" or "acrylic and methacrylic monomers". However, polymerizable monomers other than acrylic and/or methacrylic monomers as e.g. styrene and the like may also be contained in a "(meth)acrylic copolymer". In other words a (meth)acrylic polymer may consist of only acrylic and/or methacrylic monomer units but does not have to. The notation "(meth)acrylate polymer or copolymer" or "(meth)acrylic polymer or copolymer" is intended to mean that the polymer/copolymer (polymer skeleton/backbone) is formed predominantly, i.e. preferably more than 50% or more than 75% of the monomer units used, from monomers having a (meth)acrylate group. In the preparation of a (meth)acrylic copolymer, preferably more than 50% or more than 75% of the monomers thus have a (meth)acrylate group. However, the use of further monomers as comonomers for its preparation is not excluded.

The diblock copolymer (A) has an amine number in the range of from 0.1 to 48.0 mg KOH/g copolymer. The amine number can be determined by the titration method according to DIN 16945:1989-03. Preferably, the amine number is in the range of from 0.9 to 48.0 mg KOH/g copolymer or of from 1.5 to 48.0 mg KOH/g copolymer, more preferably of from 2.5 to 48.0 mg KOH/g copolymer, still more preferably of from 3.5 to 48.0 mg KOH/g copolymer, yet more preferably of from 5.0 to 48.0 mg KOH/g copolymer and in particular of from 7.0 to 48.0 mg KOH/g copolymer. Preferred is also an amine number in the range of from 0.1 to <48.0 mg KOH/g copolymer or of from 0.9 to <48.0 mg KOH/g copolymer or of from 1.5 to <48.0 mg KOH/g copolymer or of from 2.5 to <48.0 mg KOH/g copolymer or of from 3.5 to <48.0 mg KOH/g copolymer or of from 5.0 to <48.0 mg KOH/g copolymer, more preferably in the range of from 0.1 to 47.5 mg KOH/g copolymer or of from 0.9 to 47.5 mg KOH/g copolymer or of from 3.5 to 47.5 mg KOH/g copolymer or of from 5.0 to 47.5 mg KOH/g copolymer.

The relative weight ratio of the first block consisting of repeating units 1 to the second block comprising at least repeating units 2 and repeating units 3 and, if present, repeating units 1, of the diblock copolymer (A) is in the range of from 90:10 to 50:50, preferably in the range of from 90:10 to 60:40 or of from 85:15 to 60:40, more preferably in the range of from 85:15 to 65:35 or of from 81:19 to 65:35.

The terms "first block" and "second block" as used herein and in the following mean that the diblock copolymers consists of two blocks. Herein the "first block" is always the block, which consists of repeating units 1, while the "second block" always contains repeating unit 2, repeating units 3 and optionally repeating units 1. The order in which the two blocks are formed is not determined by the terms "first" and "second" in conjunction with the term "block". Therefore the "second block" can be formed first, followed by the formation of the "first block", and vice versa.

The diblock copolymer (A) has a weight average molecular weight M_{w} in the range of from 5,000 to 15,000. The weight average molecular weight M_{w} is determined according to the method described hereinafter ("Test methods"), i.e. is determined in accordance with DIN 55672 Part 1 by means of gel permeation chromatography (GPC) using tetrahydrofuran containing 1 vol.-% dibutylamine as eluent and polystyrene as standard. Preferably, the diblock copolymer (A) has a weight average molecular weight M_{w} in the range of from >5,000 to 15,000, more preferably of from 5,500 to 14,500, even more preferably of from 6,000 to 14,000, still more preferably of from 6,000 to 13,500, in particular of from 6,000 to 13,000, most preferred of from >6,000 to 13,000. Alternatively, the diblock copolymer (A) preferably has a weight average molecular weight M_{w} in the range of from 5,000 to 14,000, more preferably of from 5,000 to 13,000. If the weight average molecular weight M_{w} of the diblock copolymer is lower than 5,000, the stabilization of the inventive composition such as a pigment concentrate containing at least one diblock copolymer (A) as wetting agent and/or dispersant is not satisfactory. If the weight average molecular weight M_{w} of the diblock copolymer is higher than 15,000, the viscosity of the inventive composition such as a pigment concentrate containing at least one diblock copolymer (A) as wetting agent and/or dispersant can be too high for many applications such as the construction of photoresists and the formulation of certain types of inkjet inks.

Preferably, the diblock copolymer (A) has a polydispersity (i.e. a ratio of M_{w}/Mₙ) in the range of from >1 to 1.67, more preferably of from 1.03 to 1.67, still more preferably of from 1.05 to 1.65, yet more preferably of from 1.07 to 1.60, in particular of from 1.10 to 1.60 or of from 1.10 to 1.55, most preferred of from 1.15 to 1.55 or of from 1.15 to 1.50.

The diblock copolymer (A) preferably has a number average molecular weight (Mₙ) in the range of from 3,000 to 13,000, preferably of from 3,500 to 12,500, more preferably of from 4,000 to 12,000, even more preferably of from 4,000 to 11,000, still more preferably of from 4,500 to 10,000. The number average molecular weight is determined according to the method described hereinafter ("Test methods"), i.e. is determined via GPC using polystyrene standards and THF (with 1 volume-% of dibutylamine) as eluent.

The diblock copolymer (A) is preferably obtained by a radical copolymerization, in particular a free-radical addition polymerization in a manner known to those skilled in the art. Said free-radical polymerization preferably takes place by means of peroxides or azo compounds as free-radical initiators in organic solvents or in bulk. Suitable solvents include esters, such as ethyl acetate, n-butyl acetate or 1-methoxy-2-propyl acetate, for example, and aromatic solvents, such as toluene or xylene, for example, or else ketones, such as methyl isobutyl ketone or methyl ethyl ketone, for example. It is preferred to use low-boiling solvents at atmospheric pressure in order to facilitate the distillative removal of the solvents in the case of applications in which the copolymers are to be used as a 100% product, for example in UV-curing coating compositions. Suitable initiators include peroxides, such as tert-butyl peroxobenzoate or dibenzoyl peroxide, for example. It is also possible, however, to use azo compounds, such as azoisobutyronitrile (AIBN), for example. Peroxides are preferably used. The radical addition polymerization is preferably conducted at temperatures from 40° C to 180° C, more preferably from 100° C to 150° C, with particular preference from 110° C to 130° C. The radical polymerization can be performed as a continuous or batchwise process. The radical polymerization can be performed, for example, as a bulk polymerization, as a solution polymerization, as a precipitation polymerization, as an emulsion polymerization or as a suspension polymerization. The radical polymerization can be performed as an uncontrolled free-radical polymerization or as a controlled free-radical polymerization.

The diblock copolymer (A) is preferably obtainable by group transfer polymerization (GTP) or controlled radical polymerization processes such as atom transfer radical polymerization (ATRP), nitroxyl mediated polymerization (NMP), reversible addition fragmentation chain transfer polymerization (RAFT) or organotellurium-mediated living radical polymerization. Particularly preferred is GTP.

Preferably, the diblock copolymer (A) is obtainable by formation of a diblock intermediate polymer, preferably via GTP, consisting of a first block consisting of repeating units 1 and a second block containing or consisting of repeating units 2, followed by a polymer-analogous reaction to generate repeating units 3, preferably by partial quaternization of the amino groups of repeating units 2.

### Repeating unit 1

The wetting and dispersing additive (A) is a diblock copolymer. The first block of the diblock copolymer consists of one or more identical or different repeating units 1 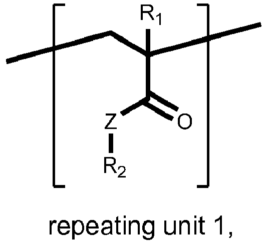 wherein
Z is O or NH, preferably is O,
R₁ is H or CH₃, preferably is CH₃, and
R₂ is a monoether or polyether radical, a linear or branched alkyl, cycloalkyl, aryl or aralkyl.

The one or more identical or different repeating units 1 of the first block of the diblock copolymer are different from the one or more identical or different repeating units 2 and 2 of the second block of the diblock copolymer.

Preferably, R₂ represents an unbranched (i.e. linear) alkyl residue with 1 to 12 carbon atoms, a branched alkyl residue with 3 to 12 carbon atoms, a cycloalkyl residue with 4 to 8 carbon atoms, an araliphatic residue such as an aralkyl residue with 7 to 12 carbon atoms, an aryl residue with 6 to 12 carbon atoms, or denotes -(RₐO)ₙR_{b}, wherein Rₐ is a linear or branched alkylene group with 2 to 6 carbon atoms, R_{b} is aralkyl, preferably with 7 to 12 carbon atoms, aryl, preferably with 6 to 12 carbon atoms or alkyl, preferably with 1 to 8 carbon atoms; and n is 2 to 50.

An araliphatic residue in the sense of the present invention is preferably a residue, which contains an aryl group and an aliphatic group such as an alkyl group. In case the aliphatic group is an alkyl group, the residue is an aralkyl residue. The aliphatic group of the araliphatic residue is bound to the respective superordinate structure: for instance, if R₂ is benzyl, the phenyl group of said benzyl group is bound to variable Z via its CH₂-group (i.e. via its aliphatic group).

Preferably, R₂ represents an unbranched alkyl residue with 1 to 12, preferably 1 to 10 carbon atoms, a branched alkyl residue with 3 to 12, preferably 1 to 10 carbon atoms, a cycloalkyl residue with 4 to 8, preferably 6 carbon atoms, or an araliphatic residue with 7 to 12 carbon atoms, like benzyl.

Preferably, repeating unit 1 of the diblock copolymer is formed from ethylenically unsaturated monomers that are selected from the group consisting of acrylic esters, methacrylic esters, acrylamides and/or methacrylamides, which carry no primary, secondary, tertiary or quaternized amino group.

Examples for such monomers are:
(i) (meth)acrylic esters of straight-chain alcohols having 1 to 22, preferably 1 to 12, more preferably 1 to 8 and most preferably 1 to 6 carbon atoms, branched or cycloaliphatic alcohols having 3 to 22, preferably 3 to 12, more preferably 3 to 8 and most preferably 3 to 6 carbon atoms; examples are methyl (meth)acrylate, ethyl (meth)acrylate, n-butyl (meth)acrylate, tert-butyl (meth)acrylate, n-hexyl (meth)acrylate, isobutyl (meth)acrylate, isopentyl (meth)acrylate, lauryl (meth)acrylate, 2-ethylhexyl (meth)acrylate, stearyl (meth)acrylate, cyclohexyl (meth)acrylate, behenyl (meth)acrylate, isodecyl (meth)acrylate, 2-propylheptyl (meth)acrylate, 3,5,5-trimethyl-1-hexyl (meth)acrylate, nonanyl (meth)acrylate, 2-propylheptyl (meth)acrylate, 2-isopropyl-5-methyl-hexyl (meth)acrylate, tridecyl (meth)acrylate, heptadecyl (meth)acrylate, heneicosanyl (meth)acrylate and isobornyl (meth)acrylate; and
(ii) aryl (meth)acrylic esters whose aryl ring, without possible additional substituents, contains 5 to 12, preferably 6 to 10, carbon atoms, such as phenyl acrylate; and aralkyl (meth)acrylic esters whose aralkyl radical, without possible additional substituents on the aryl radical, contains 6 to 12, preferably 7 to 12, carbon atoms, such as benzyl methacrylate, it being possible for the aryl radicals of the aryl (meth)acrylic esters and of the aralkyl (meth)acrylic esters in each case to be unsubstituted or to be substituted up to four times, such as, for example, 4-methylphenyl methacrylate; and
(iii) (meth)acrylic acid esters of monoether monoalcohol or polyether monoalcohols, such as ethers, polyethylene glycols, polypropylene glycols, polybutylene glycols or mixed polyalkylene glycols having 4 to 80 carbon atoms and a statistical, a block or a gradient distribution of the different monomers along the chain, such as, for example, tetrahydrofurfuryl (meth)acrylate, di(ethylene glycol) methyl ether (meth)acrylate, furfuryl (meth)acrylate, 2-butoxyethyl (meth)acrylate, 2-ethoxyethyl (meth)acrylate, allyloxyethyl (meth)acrylate, 1-ethoxybutyl (meth)acrylate, ethyltriglycol (meth)acrylate, butyldiglycol (meth)acrylate, poly(propylene glycol) methyl ether (meth)acrylate and poly(ethylene glycol) alkyl ether (meth)acrylate, wherein alkyl stands for a straight-chain or branched alkyl residue having 1 to 22, preferably 1 to 15, more preferably 1 to 13, even more preferably 1 to 10 carbon atoms and most preferable 1 to 7 carbon atoms; and

Most preferred are methyl and butyl (meth)acrylate, cyclohexyl (meth)acrylate, isobornyl (meth)acrylate as well as polyalkyleneoxide (meth)acrylates of the following formula (A) 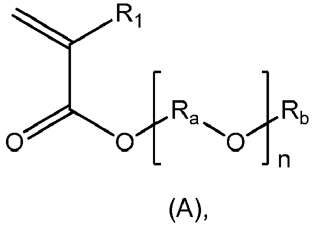 with R₁ = H or CH₃, preferably CH₃, Rₐ = linear or branched alkylene group with 2 to 6 carbon atoms, R_{b} = aralkyl, preferably benzyl; aryl, preferably phenyl; or alkyl with 1 to 8 carbon atoms, preferably methyl, ethyl, propyl or butyl; and n = 2 to 50, and in case at least two different types of residue Rₐ are present in the n [RₐO] units, the [RₐO]ₙ chain may have a random, block or gradient architecture along the chain.

Preferred are the esters of the methacrylic acid rather than the esters of acrylic acid for the preparation of the first block of the diblock copolymer.

Preferably, the first block of the diblock copolymer (A) does not contain any repeating units based on poly(alkylene glycol) ether (meth)acrylates, in particular does not contain any repeating units based on poly(ethylene glycol) ethyl ether (meth)acrylates. Preferably, the first block of the diblock copolymer (A) does not contain any repeating units based on polyether (meth)acrylates, in particular does not contain any repeating units based on polyether (meth)acrylates having 1 to 20 polyether units -(R'-O)ₙ-R", wherein R' is ethylene or propylene, n is 1 to 20 and R" is an alkyl group consisting of 1 to 5 carbon atoms.

The second block of the diblock copolymer comprises
i) one or more identical or different repeating units 2, and
ii) one or more identical or different repeating units 3 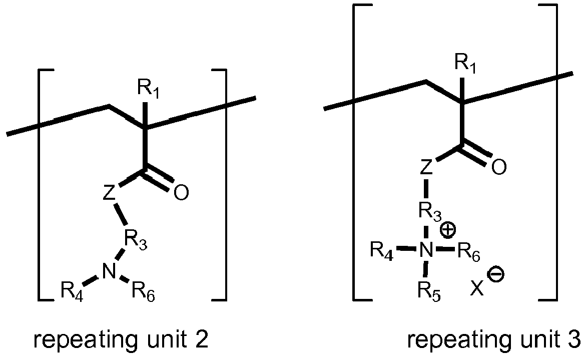
and iii) optionally up to 40 weight-% of repeating units 1, based on the total weight of repeating units in the second block, wherein R₁, Z, R₃, R₄, R₆, R₅ and X have one of the above defined meanings.

The second block of the diblock copolymer may thus contain optionally up to 40 wt.-% of repeating units 1, based on the total weight of repeating units in the second block. As repeating units 1, the same repeating units 1 described in connection with the first block of the diblock copolymer and all preferred embodiments thereof as described hereinbefore, can be used and incorporated into the second block.

Preferably, the second block consists of repeating units 2 and repeating units 3, i.e. no repeating units 1 are present within the second block copolymer.

As outlined hereinbefore, the relative weight ratio of the first block consisting of repeating units 1 to the second block comprising at least repeating units 2 and repeating units 3 and, if present, repeating units 1, of the diblock copolymer (A) is in the range of from 90:10 to 50:50. Thus, the amount of the first block of the diblock copolymer (A) is at least 50 wt.-%, based on the total weight of the diblock copolymer (A), and is at most 90 wt.-%, based on the total weight of the diblock copolymer (A).

Preferably, the amount of the repeating units 2 within the diblock copolymer (A) is at most 13.45 wt.-%, based on the total weight of the diblock copolymer (A). Preferably, the amount of the repeating units 2 within the diblock copolymer (A) is in the range of from 0.20 to 13.45 wt.-% in particular in the range of from 0.25 to 13.45 wt.-%, in each case based on the total weight of the diblock copolymer (A).

Preferably, the amount of the repeating units 3 within the diblock copolymer (A) is in the range of from 0.05 to 49.80 wt.-% or in the range of from 0.05 to 49.0 wt.-%, more preferably in the range of from 0.1 to 48.0 wt.-%, still more preferably in the range of from 0.2 to 45.0 wt.-%, yet more preferably in the range of from 0.5 to 42.5 wt.-%, based in each case on the total weight of the diblock copolymer (A).

The relative weight ratio of repeating units 2 to repeating units 3 within the second block of the diblock copolymer is preferably in the range of from 1:2.2 to 1: 250 or in the range of from 1:2.3 to 1:249. More preferably, the relative weight ratio of repeating units 2 to repeating units 3 within the second block of the diblock copolymer is in the range of from 1:2.3 to 1:200 or in the range of from 1:2.3 to 1:150.

### Repeating unit 2

Preferably, within repeating unit(s) 2,
Z is O or NH, preferably O,
R₁ is H or CH₃, preferably CH₃,
R₃ is a linear hydrocarbon chain with 2 to 4 carbon atoms, the linear hydrocarbon chain optionally being interrupted by one or more oxygen atoms and/or having a hydroxyl group attached to the hydrocarbon chain, and
R₄ and R₆ independently of one another represent an unbranched (i.e. linear) aliphatic group such as an alkyl or alkenyl group with 1 to 12 carbon atoms, a branched aliphatic group such as an alkyl group with 3 to 12 carbon atoms, a cycloaliphatic group such as a cycloalkyl group with 4 to 8 carbon atoms, an araliphatic group such as an aralkyl group with 7 to 12 carbon atoms, or an aryl group with 6 to 12 carbon atoms, wherein each of these groups may be substituted or unsubstituted and may in particular contain tertiary amino groups and/or hydroxyl groups; or
R₄, R₆ and the nitrogen atom, to which both groups are bound, form a saturated or unsaturated heterocyclic ring with 3 to 16 carbon atoms, optionally further containing one or more such as 1, 2 or 3 heteroatoms selected from oxygen and nitrogen as ring atoms.

Repeating unit 2 of the diblock copolymer is different from both repeating units 1 and 3 of the diblock copolymer. In particular, repeating unit 2 of the diblock copolymer does not contain any quaternized amino group.

Preferably, repeating unit 2 of the diblock copolymer is formed from ethylenically unsaturated monomers that are selected from the group consisting of acrylic esters, methacrylic esters, acrylamides and/or methacrylamides, which carry at least one tertiary amino group.

More preferably, the acrylic esters, methacrylic esters, acrylamides and/or methacrylamides used for formation of repeating unit 2 are s selected from the group consisting of tert.-aminoalkyl (meth)acrylic esters having 2 to 12, preferably 2 to 8 carbon atoms in the tert.-aminoalkyl radical, including possible additional substituents, like further additional tert.-amino groups in residues R₄ and R₆.

Examples of monomers used for formation of repeating unit 2 are in particular N,N-dimethylaminoethyl (meth)acrylate, N,N-diethylaminoethyl (meth)acrylate, N-ethyl-N-phenyl-aminoethyl (meth)acrylate, N-methyl-N-phenyl-aminoethyl (meth)acrylate, N,N-dibutylaminoethyl (meth)acrylate, 2-[2-dimethylaminoethyl(methyl)amino]ethyl (meth)acrylate, 2-(2-dimethylaminoethyloxy)ethyl (meth)acrylate, 2-morpholinoethyl (meth)acrylate, 2-(1-piperidyl)ethyl (meth)acrylate, 2-(N-ethylanilino)ethyl (meth)acrylate, 2-imidazol-1-ylethyl (meth)acrylate and N,N-dimethylaminopropyl (meth)acrylate. Most preferred in the present invention is the use of N,N-dimethylaminoethylmethacrylat (DMAEMA).

Preferred are the esters of the methacrylic acid rather than the esters of acrylic acid for the preparation of the second block of the diblock copolymer.

Repeating units 2 containing at least one tertiary amino group can also be produced by polymer-analogous reactions after the construction of the polymer chain. Hence oxiran-containing ethylenically unsaturated monomers such as glycidyl methacrylate can be reacted with amines after the polymerization. In such case residues R₄ and/or R₆ may contain hydroxyl groups. Suitable for this purpose are in particular primary amines which additionally carry one or more tertiary amino group(s) or secondary amines, which optionally additionally carry one or more tertiary amino group(s). Examples thereof are as follows: primary amines, which additionally carry one or more tertiary amino groups such as dimethylaminopropylamine and diethylaminoethylamine; dialkylamines such as diethylamine, dibutylamine and dicyclohexylamine; secondary amines having two different substituents such as, for example, N-(2-hydroxyethyl)aniline; secondary amines which additionally carry one or more tertiary amino groups, such as bis(3-dimethylaminopropyl)amine; dihydroxyalkylamines, such as diethanolamine and diisopropanolamine. Preference as reaction partners is given to secondary amines which optionally additionally carry one or more tertiary amino groups.

### Repeating unit 3

Preferably, within repeating unit(s) 3,
Z is O or NH, preferably O,
R₁ is H or CH₃, preferably CH₃,
R₃ is a linear hydrocarbon chain with 2 to 4 carbon atoms, the linear hydrocarbon chain optionally being interrupted by one or more oxygen atoms and/or having a hydroxyl group attached to the hydrocarbon chain,
R₄ and R₆ independently of one another represent an unbranched (i.e. linear) aliphatic group such as an alkyl or alkenyl group with 1 to 12 carbon atoms, a branched aliphatic group such as an alkyl group with 3 to 12 carbon atoms, a cycloaliphatic group such as a cycloalkyl group with 4 to 8 carbon atoms, an araliphatic group such as an aralkyl group with 7 to 12 carbon atoms, or an aryl group with 6 to 12 carbon atoms, wherein each of these groups may be substituted or unsubstituted and may in particular contain tertiary amino groups and/or hydroxyl groups; or
R₄, R₆ and the nitrogen atom, to which both groups are bound, form a saturated or unsaturated heterocyclic ring with 3 to 16 carbon atoms, optionally further containing one or more such as 1, 2 or 3 heteroatoms selected from oxygen and nitrogen as ring atoms, and
R₅ is an unbranched (i.e. linear) aliphatic group such as an alkyl or alkenyl group with 1 to 12 carbon atoms, a branched aliphatic group such as an alkyl group with 3 to 12 carbon atoms, a cycloaliphatic group such as a cycloalkyl group with 4 to 8 carbon atoms, an araliphatic group such as an aralkyl group with 7 to 12 carbon atoms, or an aryl group with 6 to 12 carbon atoms, wherein each of these groups may be substituted or unsubstituted and may in particular contain at least one hydroxyl group, at least one ether groups and/or at least one ester groups,
X^{θ} is an acid anion selected from the group consisting of a halide anion, a carboxylic acid anion, an anion of a phosphorous or sulfur containing acid and an acidic ester of a phosphorous or sulfur containing acid.

In particular R₅ is an unbranched (i.e. linear) aliphatic group such as an alkyl or alkenyl group with 1 to 12 carbon atoms, a branched aliphatic group such as an alkyl group with 3 to 12 carbon atoms, a cycloaliphatic group such as a cycloalkyl group with 4 to 8 carbon atoms, an araliphatic group such as an aralkyl group with 7 to 12 carbon atoms, or an aryl group with 6 to 12 carbon atoms, wherein each of these groups may be substituted or unsubstituted and may in particular contain at least one hydroxyl group, at least one ether group and/or at least one ester group.

Most preferred, R₅ is a part structure of below depicted formula (X), 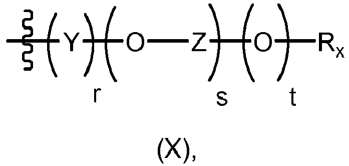 wherein
the symbol 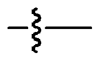 denotes a bond of the part structure of formula (X) to the nitrogen atom of repeating unit 3,
Y is C₂-C₄ alkylene group, which may be optionally substituted with OH,
r is 0 or 1;
Z represents a C₂-C₄ alkylene group, -C(=O)- or a -C(=O)-C₂-C₄ alkylene group,
s is 0 or 1 to 20,
t is 0 or 1 and
Rₓ is an unbranched aliphatic group such as an alkyl or alkenyl group with 1 to 12 carbon atoms, a branched aliphatic group such as an alkyl group with 3 to 12 carbon atoms, a cycloaliphatic group such as a cycloalkyl group with 4 to 8 carbon atoms, an araliphatic group such as an aralkyl group with 7 to 12 carbon atoms, or an aryl group with 6 to 12 carbon atoms.

After formation of a diblock copolymer from repeating units 1, forming the first block, and repeating units 2 and optionally repeating units 1, forming the second block, a diblock copolymer precursor (i.e. a diblock copolymer containing no repeating units 3 is obtained, which is herein also called "intermediate diblock copolymer". The repeating units 3 are then formed by a polymer analogous reaction in order partially convert the repeating units 2 to repeating units 3. Said polymer analogous reaction carried out on the before-mentioned intermediate diblock copolymer is a quaternization reaction.

The typical reaction temperature for a quaternization reaction is in the range of 50°C to 200°C, preferably in the range of 80°C to 150°C, more preferably 100°C to 140°C. It is advantageous to additionally use a solvent like esters or alcohols with a boiling point within the range of the preferred reaction temperature or with a higher boiling point in this reaction step.

The repeating unit 3 is preferably obtained from subjecting repeating units 2 to a quaternization reaction after the intermediate diblock copolymer is formed. The quaternization reaction can be carried out step by step or simultaneously, by adding one, two or more different alkylating agents to achieve an incomplete, i.e. partial conversion of repeating units 2 to repeating units 3.

Such quaternization agents to form repeating units 3 may for example be selected from alkyl halides and aralkyl halides, alpha-olefin oxides or glycidyl ethers in the presence of acids. Typically alkyl halides and aralkyl halides like benzyl chloride, 2-or 4-vinylbenzyl chloride, methyl chloride or methyl iodide can be used. Moreover tosylates like methyl tosylate or sulfates like dimethylsulfate can be used.

Another way of quaternization is the use of glycidyl ethers or glycidyl esters in the presence of acids. Examples for glycidyl ethers are alkyl glycidyl ethers like 2-ethylhexyl glycidyl ether, Grilonit RV 1814 (i.e. C₁₃/C₁₅-alkyl glycidyl ether) and Cardura E10 (i.e. glycidyl ester of synthetic, highly branched C₁₀ tertiary carboxylic acid (Versatic acid 10)) or aryl glycidyl ethers like cresylglycidyl ether as well as glycidyl methacrylate. Examples for acids used in this quaternization reaction are carboxylic acids like benzoic acid, acetic acid or lactic acid or acidic alkoylated polyethers such as AKYPO RC 0960 (i.e. C₁₆H₃₃-OH started EO/PO polyether carboxylic acid, M_{w} 1000 g/mol) from KAO Chemicals, sulfonic acids such as p-toluenesulfonic acid or phosphoric acid esters (RO-PO(OH)₂ or (RO)₂-PO(OH). Preferred is benzyl chloride and cresylglycidyl ether and Grilonit RV 1814 in combination with a carboxylic acid or a phosphoric acid monoester.

A further way of quaternization is the use of alpha-olefin oxides in the presence of acids. These alpha-olefin oxides are especially useful for applications which are sensitive to halide impurities, since their manufacture is carried out by chloride-free epoxidation of terminal double bonds, usually. The amount of hydrolyzable Chloride can be determined by applying ASTM D1726-11, wherein 5 ppm to 2500 ppm hydrolyzable chloride in a sample may be determined. Examples for alpha-olefin epoxides are 1,2-octene epoxide, Vikolox 10 (i.e. 1,2-decene epoxide), Vikolox 18 (i.e. 1,2-octadecene epoxide) and terpene epoxides, such as Limonene monooxide, Camphene oxide and alpha-Pinene oxide. Examples for acids used in this quaternization reaction are carboxylic acids like benzoic acid, acetic acid or lactic acid or acidic alkoylated polyethers such as AKYPO RC 0960 (i.e. C₁₆H₃₃-OH started EO/PO polyether carboxylic acid, M_{w} 1000 g/mol) from KAO Chemicals, sulfonic acids such as p-toluenesulfonic acid or phosphoric acid esters (RO-PO(OH)₂ or (RO)₂-PO(OH). Preferred is Vikolox 10 and alpha-Pinene oxide in combination with a carboxylic acid or a phosphoric acid monoester.

Preferred is a diblock copolymer, wherein R₁ is CH₃, R₃ is CH₂CH₂, R₄ and R₆ are each CH₃, R₅ is CH₂Ph, and Z = O.

The content of the diblock copolymer (A) in the inventive composition is preferably 0.1 to 20% by weight, more preferably 0.4 to 10% by weight, most preferably 0.8 to 3% by weight, of the total solid matter of the inventive composition. The amount of solid matter is determined via DIN EN ISO 3251:2008-06 at 150°C for 20 min.

Preferably, the diblock copolymer (A) does not contain any repeating units based on poly(alkylene glycol) ether (meth)acrylates, in particular does not contain any repeating units based on poly(ethylene glycol) ethyl ether (meth)acrylates.

Preferably, the diblock copolymer (A) does not contain any repeating units based on polyether (meth)acrylates, in particular does not contain any repeating units based on polyether (meth)acrylates having 1 to 20 polyether units -(R'-O)ₙ-R", wherein R' is ethylene or propylene, n is 1 to 20 and R" is an alkyl group consisting of 1 to 5 carbon atoms.

### Colorant (B)

The colorant can be at least one pigment or at least one dye or a mixture thereof. As the colorant in the inventive composition a pigment is preferred. Organic and/or inorganic pigments can be used. Preferred are organic pigments.

The content of the colorant (B) such as the pigment content of the inventive composition is preferably 1 to 40% by weight, more preferably 1.5 to 20% by weight, most preferably 2 to 10% by weight, of the total solid matter of the inventive composition. The amount of solid matter is determined via DIN EN ISO 3251:2008-06 at 150°C for 20 min.

Colors of a color filter are usually red, green or blue with a black matrix surrounding the pixels. Very often pigments are mixed to achieve the color of the certain pixel. For example the green pixel composition can contain a blend of pigments with a green shade and a yellow shade.

Preferred organic pigments are azo-pigments, phthalocyanine-pigments, quinacridone-pigments, benzimidazolone-pigments, isoindolinone-pigments, dioxazine-pigments, indanthrene-pigments, and perylene-pigments. The pigments can also be inorganic pigments. Examples of usable pigments will be shown below by a pigment number. "C.I." listed below means color index (C.I.).

Examples of red pigments used as colorant (B) include C. I. Pigment Red 1, 2, 3, 4, 5, 6, 7, 8, 9, 12, 14, 15, 16, 17, 21, 22, 23, 31, 32, 37, 38, 41, 47, 48, 48:1, 48:2, 48:3, 48:4, 49, 49:1, 49:2, 50:1, 52:1, 52:2, 53, 53:1, 53:2, 53:3, 57, 57:1, 57:2, 58:4, 60, 63, 63:1, 63:2, 64, 64:1, 68, 69, 81, 81:1, 81:2, 81:3 ,81:4, 83, 88, 90:1, 101, 101:1, 104 ,108, 108:1, 109, 112, 113, 114, 122, 123, 144, 146, 147, 149, 151, 166, 168, 169, 170, 172, 173, 174, 175, 176, 177, 178, 179, 181, 184, 185, 187, 188, 190, 193, 194, 200, 202, 206, 207, 208, 209, 210, 214, 216, 220, 221, 224, 230, 231, 232, 233, 235. 236, 237, 238, 239, 242, 243, 245, 247, 249, 250, 251, 253, 254, 255, 256, 257, 258, 259, 260, 262, 263, 264, 265, 266, 267, 268, 269, 270, 271, 272, 273, 274, 275, and 276. Among the above, C. I. Pigment Red 48:1, 122, 168, 177, 202, 206, 207, 209, 224, 242 or 254 is preferable, and C. I. Pigment Red 177, 209, or 254 is further preferable.

Examples of red dyes used as colorant (B) are C.I. Solvent Red 25, 27, 30, 35, 49, 83, 89, 100, 122, 138, 149, 150, 160, 179, 218, 230; C.I. Direct Red 20, 37, 39, 44; C.I. Acid Red 6, 8, 9, 13, 14, 18, 26, 27, 51, 52, 87, 88, 89, 92, 94, 97, 111, 114, 115, 134, 145, 151, 154, 180, 183, 184, 186, 198; C.I. Basic Red 12 and 13; C.I. Disperse Red 5, 7,13, 17 and 58. The red dyes can be used in combination with yellow and/or orange dyes.

Examples of blue pigments used as colorant (B) include C. I. Pigment Blue 1, 1:2, 9, 14, 15, 15:1, 15:2, 15:3, 15:4, 15:6, 16, 17, 19, 25, 27, 28, 29, 33, 35, 36, 56, 56:1, 60, 61, 61:1, 62, 63, 66, 67, 68, 71, 72, 73, 74, 75, 76, 78, and 79. Among them, C. I. Pigment Blue 15, 15:1, 15:2, 15:3, 15:4 or 15:6 is preferable, and C. I. Pigment Blue 15:3, 15:4 or 15:6 are further preferable.

Examples for blue dyes used as colorant (B) are C.I. Solvent Blue 25, 49, 68, 78, 94; C.I. Direct Blue 25, 86, 90, 108; C.I. Acid Blue 1, 7, 9, 15, 103, 104, 158, 161; C.I. Basic Blue 1, 3, 9, 25 and C.I. Disperse Blue 198.

Examples of the green pigment used as colorant (B) include C. I. Pigment Green 1, 2, 4, 7, 8, 10, 13, 14, 15, 17, 18, 19, 26, 36, 45, 48, 50, 51, 54, 55, 58 or 59. Among them, C. I. Pigment Green 7, 36, 58 or 59 is preferable.

Examples of green dyes used as colorant (B) are C.I. Acid Green 3, 9, 16 and C.I. Basic Green 1 and 4.

Examples of the yellow pigment used as colorant (B) include C. I. Pigment Yellow 1, 1:1, 2, 3, 4, 5, 6, 9, 10, 12, 13, 14, 16, 17, 24, 31, 32, 34, 35, 35:1, 36, 36:1, 37, 37:1, 40, 41, 42, 43, 48, 53, 55, 61, 62, 62:1, 63, 65, 73, 74, 75, 81, 83, 87, 93, 94, 95, 97, 100, 101, 104, 105, 108, 109, 110, 111, 116, 117, 119, 120, 126, 127, 127:1, 128, 129, 133, 134, 136, 138, 139, 142, 147, 148, 150, 151, 153, 154, 155, 157, 158, 159, 160, 161, 162, 163, 164, 165, 166, 167, 168, 169, 170, 172, 173, 174, 175, 176, 180, 181, 182, 183, 184, 185, 188, 189, 190, 191, 191:1, 192, 193, 194, 195, 196, 197, 198, 199, 200, 202, 203, 204, 205, 206, 207, and 208. Among them, C. I. Pigment Yellow 83, 117, 129, 138, 139, 150, 154, 155, 180, or 185 is preferable, and C. I. Pigment Yellow 83, 138, 139, 150 or 180 is further preferable.

Examples for yellow dyes used as colorant (B) are C.I. Solvent Yellow 2, 5, 14, 15, 16, 19, 21, 33, 56, 62, 77, 83, 93, 104, 105, 114, 129, 130, 162; C.I. Disperse Yellow 3, 4, 7, 31, 54, 61, 201; C.I. Direct Yellow 1, 11, 12, 28; C.I. Acid Yellow 1, 3, 11, 17, 23, 38, 40, 42, 76, 98; C.I. Basic Yellow 1.

Examples of a violet pigment used as colorant (B) include C. I. Pigment Violet 1, 1:1, 2, 2:2, 3, 3:1, 3:3, 5, 5:1, 14, 15, 16, 19, 23, 25, 27, 29, 31, 32, 37, 39, 42, 44, 47, 49, and 50. Among them, C. I. Pigment Violet 19, or 23 is preferable, and C. I. Pigment Violet 23 is further preferable.

Examples of violet dyes used as colorant (B) are C.I. Solvent Violet 13, 33, 45, 46; C.I. Disperse Violet 22, 24, 26, 28, C.I. Acid Violet 49, and C.I. Basic Violet 2, 7, 10.

Examples of an orange pigment used as colorant (B) include C. I. Pigment Orange 1, 2, 5, 13, 16, 17, 19, 20, 21, 22, 23, 24, 34, 36, 38, 39, 43, 46, 48, 49, 61, 62, 64, 65, 67, 68, 69, 70, 71, 72, 73, 74, 75, 77, 78, and 79. Among them, C. I. Pigment Orange 38 or 71 is preferable.

Examples of orange dyes used as colorant (B) are C.I. Solvent Orange 1, 2, 5, 6, 37, 45, 62, 99; C.I. Acid Orange 1, 7, 8, 10, 20, 24, 28, 33, 56, 74; C.I. Direct Orange 1 and C.I. Disperse Orange 5.

Besides so-called "single grinds" of dispersions of one type of pigment, another example for the highly beneficial use of the inventive diblock copolymer as wetting agent and/or dispersant is the dispersing and stabilization of mixtures of organic pigments, so-called "co-grinds". Mixtures of organic pigments are produced to obtain colored coatings, especially photoresists, with unique coloristic properties matching best the color space that the human eye can interpret. Mixtures of organic pigments and their co-grinds in the sense of this invention can comprise, for instance: C.I. Pigment Blue 15:6 and C.I. Pigment Violett 23; C.I. Pigment Blue 15:4 and C.I. Pigment Violett 23; C.I. Pigment Blue 15:3 and C.I. Pigment Violett 23; C.I. Pigment Green 58 and C.I. Pigment Yellow 138; C.I. Pigment Green 59 and C.I. Pigment Yellow 138; C.I. Pigment Green 36 and C.I. Pigment Yellow 138; C.I. Pigment Green 7 and C.I. Pigment Yellow 138 among others.

It is preferable that the pigment(s) used as colorant (B) have an average median particle diameter of 1 µm or less, preferably 0.3 µm or less, further preferably 50 nm or less determined by laser diffraction according ISO 13320:2009.

The content of the colorant (B) such as the pigment content of the inventive composition is preferably 5 to 60% by weight, more preferably 10 to 50% by weight of the total solid matter of the inventive composition, in particular, in case the composition is used for preparing a red, green and/or blue photoresist. The amount of solid matter is determined via DIN EN ISO 3251:2008-06 at 150°C for 20 min.

A black pigment may be used alone, or may be used by mixing with the red, green or blue pigment(s) as colorant (B). Examples of the black pigment which can be used alone include carbon black, acetylene black, lamp black, bone black, graphite, iron black, and titanium black. Among them, from a viewpoint of a light shielding rate and image property, carbon black and titanium black are preferable.

The median primary particle diameter determined by laser diffraction according to ISO 13320:2009 is preferably 0.01 to 0.08 µm and the "nitrogen absorption specific surface area" is preferably 50 to 120 m²/g for the black pigments determined via ISO 9277:2010.

For the black matrix instead of carbon black, pigment mixtures of three colors of red, green and blue can be used. Examples of a coloring material which can be mixed for preparing the black pigment include C.I. Yellow Pigment 20, 24, 86, 93, 109, 110, 117, 125, 137, 138, 147, 148, 153, 154, 166; C.I. Orange Pigment 36, 43, 51, 55, 59, 61; C.I. Red Pigment 9, 97, 122, 123, 149, 168, 177, 180, 192, 215, 216, 217, 220, 223, 224, 226, 227, 228, 240; C.I. Violet Pigment 19, 23, 29, 30, 37, 40, 50; C.I. Blue Pigment 15, 15:1, 15:4,15:6, 22, 60, 64; C.I. Green Pigment 6, 36, 58; C.I. Brown Pigment 23, 25 and 26, respectively.

The content of the colorant (B) such as the pigment content of the inventive composition is preferably 20 to 80% by weight, more preferably 30 to 70% by weight of the total solid matter of the inventive composition, in particular, in case the composition is used for preparing a black photoresist. The amount of solid matter is determined via DIN EN ISO 3251:2008-06 at 150°C for 20 min.

The relative weight ratio of dispersants and/or wetting agents (A) to colorants (B) in the compositions of the present invention is preferably 95:5 to 5:95, more preferably 65:35 to 7:93 and in particular preferably 50:50 to 10:90.

### Organic Solvent (C)

The organic solvent (C) preferably has a boiling point at standard pressure (101.325 kPa) in a range of 100 to 300°C, more preferable a boiling point in the range of 120 to 250°C.

The content of the organic solvent (C) of the inventive composition is preferably 10 to 99% by weight, more preferably 20 to 97 % by weight of the total weight of the inventive composition.

Examples of such an organic solvent include glycol monoalkyl ethers such as ethylene glycolmonobutyl ether, propylene glycol monomethyl ether; glycol dialkyl ethers such as ethylene glycol diethyl ether, diethylene glycol dimethyl ether, diethylene glycol diethyl ether; glycol alkyl ether acetates such as ethylene glycol monomethyl ether acetate, ethylene glycol monoethyl ether acetate, propylene glycol monomethyl ether acetate, propylene glycol monoethyl ether acetate, propylene glycol monopropyl ether acetate, methoxybutyl acetate; dialkyl ethers such as diethyl ether; ketones such as acetone, methyl ethyl ketone, cyclohexanone; monohydric or polyhydric alcohols such as ethanol, propanol, butanol, hexanol, cyclohexanol, ethylene glycol, propylene glycol, diethylene glycol, dipropylene glycol, and glycerin; aliphatic hydrocarbons such as n-hexane; alicyclic hydrocarbons such as cyclohexane; aromatic hydrocarbons such as toluene, xylene, and cumene; linear or cyclic esters such as ethyl acetate, butyl acetate; nitriles such as acetonitrile, and benzonitrile or mixtures thereof.

Preferably, organic solvent (C) is selected from the group consisting of glycol monoalkyl ethers, glycol dialkyl ethers, glycol alkyl ether acetates and mixtures thereof. Glycol alkyl ether acetates are even more preferred. Most preferred is propylene glycol monomethyl ether. Glycol alkyl ether acetates may be used alone or in combination with other solvents.

The organic solvent is usually used to adjust the solids content and viscosity of the compositions according to the present invention and is only limited by the amount of the other ingredients.

### Further components of the inventive composition

The inventive composition necessarily contains at least components (A), (B) and (C). However, the composition may contain further components besides (A), (B) and (C).

### Alkali-Soluble Resin (D)

Preferably, the inventive composition further contains at least one polymeric resin (D), which is an alkali-soluble resin.

Examples of suitable alkali-soluble resins include the known polymers described and mentioned in JP-A No. H07-207211, JP-A No. H08-259876, JP-A No. H10-300922, JP-A No. H11-140144, JP-A No. H11-174224, JP-A No. 2000-56118, JP-A No. 2003-233179, JP-A No. H08-297366, JP-A No. 2001-89533, JP-A No. 2003-89716, JP-A No. 2003-165830, JP-A No. 2005-325331, and JP-A No. 2001-354735; resins described in JP-A No. 2005-126674, JP-A No. 2005-55814, and JP-A No. 2004-295084, JP-A No. 2005-154708, JP-A 2009-025813 and US 8 216 770.

Preferred alkali-soluble resins are:
(a) Copolymers of ethylenically unsaturated monomers with (meth)acrylic acid and/or maleic anhydride, wherein preferred ethylenically unsaturated comonomers are selected from the group consisting of styrene, benzyl methacrylate, 2-hydroxyethyl (meth)acrylate, methyl methacrylate, cyclohexyl methacrylate, isobornyl methacrylate, adamantly (meth)acrylate and glycidyl methacrylate. In case a glycidyl group is incorporated in the polymer a post reaction with acids or acid anhydrides to incorporate functional groups like carboxylic acid or (meth)acrylate moieties can be performed;
(b) Reaction products of ethylenically unsaturated monocarboxylic acid or its ester with an epoxy resin and a carboxylic acid anhydride, wherein examples of epoxy resins are monomeric and oligomeric bisphenol A, F, S-type epoxy resins, novolak-type epoxy resin, trigylcidyl isocyanurate, fluorene epoxy resin, so called cardo resin, and wherein examples of acid anhydrides are maleic anhydride, succinic anhydride, itaconic anhydride, phthalic anhydride, tetrahydrophthalic anhydride, hexahydrophthalic anhydride, pyromellitic anhydride and trimellitic anhydride.

Each of these alkali-soluble resins can be used alone or in combination.

In the composition of the present invention, the amount of the alkali-soluble resin (D) to be contained is preferably, 0.1 to 80 % by weight, preferably 1 to 60 % by weight, based on the total solid matter of the composition. The amount of solid matter is determined via DIN EN ISO 3251:2008-06 at 150°C for 20 min.

### Multifunctional Ethylenically Unsaturated Monomer (E)

Preferably, the inventive composition further contains at least one multifunctional ethylenically unsaturated monomer (E).

The multifunctional ethylenically unsaturated monomer is preferably not particularly limited as far as it is a polymerizable low-molecular weight compound containing at least one ethylenically unsaturated functional group and at least one further functional group which can also be an ethylenically unsaturated functional group or a group selected from hydroxyl groups and carboxyl groups.

The term "monomer (E)" is herein to be understood in a broader sense. It includes dimers, trimers, and low molecular weight oligomers in addition to a monomer in a narrow sense. Preferably, monomer (E) has a number-average molecular weight of less than 1000 g/mol. The number-average molecular weight is determined according to the method described hereinafter.

In a preferred embodiment of the present invention the multifunctional ethylenically unsaturated monomer contains two or more ethylenically unsaturated groups, even more preferred 2 to 6 ethylenically unsaturated groups.

Examples of the ethylenically unsaturated compound include unsaturated carboxylic acids such as (meth)acrylic acid, esters of aliphatic polyhydroxy compounds and unsaturated carboxylic acids, esters of aromatic polyhydroxy compounds and unsaturated carboxylic acids, esters obtained by an esterification reaction of unsaturated carboxylic acids or polyvalent carboxylic acids and polyhydric hydroxy compounds such as the above aliphatic polyhydroxy compounds and the aromatic polyhydroxy compounds, and ethylenically unsaturated compounds having a urethane skeleton, so-called urethane(meth)acrylates, which are preferably obtainable by reacting a polyisocyanate compound and a (meth)acryloyl group-containing hydroxy compound.

Preferred are esters of aliphatic polyhydroxy compounds and unsaturated carboxylic acids including (meth)acrylic acid esters such as ethylene glycol di(meth)acrylate, triethylene glycol di(meth)acrylate, trimethylolpropane tri(meth)acrylate, trimethylolethane tri(meth)acrylate, pentaerythritol di(meth)acrylate, pentaerythritol tri(meth)acrylate, pentaerythritol tetra(meth)acrylate, dipentaerythritol tetra(meth)acrylate, dipentaerythritol penta(meth)acrylate, dipentaerythritol hexa(meth)acrylate, and glycerol (meth)acrylate.

The multifunctional ethylenically unsaturated monomer (E) may also contain carboxylic acid groups. In such case the acid value of the multifunctional ethylenically unsaturated monomer is preferably 5 to 30 mg KOH/g.

The different multifunctional ethylenically unsaturated monomers (E) may be used also in combination. A preferred combination of multifunctional ethylenically unsaturated monomers having an acid value is a mixture containing, as a main component, dipentaerythritol hexaacrylate, dipentaerythritol pentaacrylate and succinic acid ester of dipentaerythritol pentaacrylate which is commercially available as "TO1382" manufactured by Toagosei Co. Ltd. This mixture of multifunctional ethylenically unsaturated monomers may be used by combining with other multifunctional monomers.

In the composition of the present invention, the amount of multi-functional ethylenically unsaturated monomer (E) is preferably 0.1 to 80 % by weight, more preferably 5 to 70 % by weight, further preferably 10 to 50 % by weight and particularly preferably 10 to 40% by weight, based on the total solid matter. The amount of solid matter is determined via DIN EN ISO 3251:2008-06 at 150°C for 20 min.

The relative weight ratio of multi-functional ethylenically unsaturated monomer (E) to the colorant (B) is preferably in the range of from 0.001:1 to 2:1, more preferably of from 0.05:1 to 1:1, in particular of from 0.1:1 to 0.8:1.

### Further Components (F)

The composition may also contain at least one further component (F) which differs from the components (A), (B), (C), (D) and (E). Such a further component (F) is preferably selected from the group consisting of photopolymerization initiating agents, polymerization accelerators, sensitizing dyes different from (B), surfactants and further wetting and/or dispersing additives different from (A), monofunctional ethylenically unsaturated monomers differing from (E), as e.g. esters of monohydroxy compounds and unsaturated carboxylic acids such as esters of a saturated monoalkohol and (meth)acrylic acid, and mixtures thereof.

A photopolymerization initiator (F) is usually used as a mixture of a photopolymerization initiating agent, and a polymerization accelerator which is added, if necessary, and is a component which absorbs light directly or is photosensitized to cause a degradation reaction or a hydrogen extraction reaction, and has the function of generating a polymerization active radical. Different kinds of photopolymerization initiating agents are well known in the literature and the inventive composition is not limited in terms of use of the different kinds of photopolymerization initiating agents in combination with the inventive composition. Examples of the photopolymerization initiator (F) include titanocene derivatives described in JP-A No. 59-152396, and JP-A No. 61-151197; hexaarylbiimidazole derivatives described in JP-A No. 10-300922, JP-A No. 11-174224, and JP-A No. 2000-56118; radical activating agents such as halomethylated oxadiazole derivatives, halomethyl-s-triazine derivatives, N-aryl-α-amino acids such as N-phenylglycine, N-aryl-α-amino acid salts, and N-aryl-α-amino acid esters, and α-aminoalkylphenone derivatives described in JP-A No. 10-39503; oxime ester-based derivatives described in JP-A No. 2000-80068.

Examples of the polymerization accelerator (F) which is used, if necessary, include N,N-dialkylaminobenzoic acid alkyl esters such as N,N-dimethylaminobenzoic acid ethyl ester; mercapto compounds such as mercapto compounds having a heterocycle such as 2-mercaptobenzothiazole, 2-mercaptobenzoxazole and 2-mercaptobenzoimidazole; or aliphatic multifunctional mercapto compounds.

The photopolymerization initiating agents (F) and polymerization accelerators (F) may be used alone or in combination.

For the purpose of enhancing sensitivity, one or more sensitizing dyes (F) differing from colorants (B) may be used in the composition of the present invention. As the sensitizing dye, a suitable sensitizing dye depending on the wavelength of an exposure light source is used, and examples include xanthene-based dyes described in JP-A No. 4-221958, and JP-A No. 4-219756; coumarin-based dyes having a heterocycle described in JP-A No. 3-239703, and JP-A No. 5-289335; 3-ketocoumarin-based dyes described in JP-A No. 3-239703, and JP-A No. 5-289335; pyrromethene-based dyes described in JP-A No. 6-19240; dyes having a dialkylaminobenzene skeleton described in JP-A Nos. 47-2528 and 54-155292, JP-B No. 45-37377, JP-A Nos. 48-84183, 52-112681, 58-15503, 60-88005, 59-56403, 2-69, 57-168088, 5-107761, 5-210240 and 4-288818.

The composition of the present invention may further contain one or more surfactants (F). As the surfactant, various surfactants such as anionic, cationic, nonionic, and amphoteric surfactants can be used. It is preferable to use nonionic surfactants from the viewpoint that it is unlikely that various properties such as voltage retainability and compatibility with organic solvent are impaired. Examples of anionic surfactants include alkyl sulfuric acid ester salt-based surfactants such as "Emal 10" manufactured by Kao Corporation, alkylnaphthalenesulfonic acid salt-based surfactants such as "Pelex NB-L" manufactured by Kao Corporation, and special polymer-based surfactants such as "Homogenol L-18" and "Homogenol L-100" manufactured by Kao Corporation. Among them, special polymer-based surfactants are preferable, and special polycarbonic acid-type polymer-based surfactants are more preferable. Examples of cationic surfactants include alkylamine salt-based surfactants such as "Acetamine 24" manufactured by Kao Corporation, and quaternary ammonium salt-based surfactants such as "Cotamine 24P" and "Cotamine 86W" manufactured by Kao Corporation. Among them, quaternary ammonium salt-based surfactants are preferable, and stearyltrimethylammonium salt-based surfactants are more preferable. Examples of nonionic surfactants include "SH8400" manufactured by Dow Corning Toray; silicone-based surfactants such as "KP341" manufactured by Silicone; "FC430" manufactured by Sumitomo 3M; "F470" manufactured by DIC Corporation; fluorine-based surfactants such as "DFX-18" manufactured by Neos; polyoxyethylene-based surfactants such as "Emulgen 104P" and "Emulgen A60" manufactured by Kao Corporation. Among them, silicone-based surfactants are preferable, and so-called polyether-modified or aralkyl-modified silicone-based surfactants having a structure in which a side chain of a polyether group or aralkyl group is added to polydimethylsiloxane are more preferable. Two or more kinds of surfactants may be used together, and examples include a combination of silicone-based surfactants/fluorine-based surfactants, silicone-based surfactants/special polymer-based surfactants, or fluorine-based surfactants/special polymer-based surfactants. Inter alia, a combination of silicone-based surfactants/fluorine-based surfactants is preferable. Examples of this combination of silicone-based surfactants/fluorine-based surfactants include a combination of polyether-modified silicone-based surfactants/oligomer-type fluorine-based surfactants. Specifically, examples include a combination of "TSF4460" manufactured by GE Toshiba Silicone/"DFX-18" manufactured by Neos, "BYK-300" manufactured by BYK/"S-393" manufactured by Seimi Chemical, "KP340" manufactured by Shin-Etsu Silicone/"F-478" manufactured by DIC Corporation, "SH7PA" manufactured by Dow Corning Toray/"DS-401" manufactured by Daikin, or "L-77" manufactured by Nippon Unicar/"FC4430" manufactured by Sumitomo 3M.

The composition of the present invention may contain further wetting and/or dispersing additives, which differ from dispersant (A) and are used additionally to dispersant (A) in such a range that the effect of the present invention is not impaired. The kind of further dispersant is not particularly limited as far as the effect of the present invention is not impaired.

The composition of the present invention may contain esters of monohydroxy compounds and unsaturated carboxylic acids, as e.g. esters of (meth)acrylic acid with a saturated monoalcohol. Such monomers, which differ from monomers (E) are preferably used in mixture with monomers (E).

### Use of the diblock copolymer (A)

A further aspect is a use of the inventive diblock copolymer (A) as a wetting agent and/or dispersant, in particular in compositions such as the inventive composition.

All preferred embodiments of the copolymer (A) disclosed hereinbefore or hereinafter as a constituent of the composition of the invention or as such are also preferred embodiments of the use of the inventive copolymer (A) as wetting and/or dispersing agent.

### TEST METHODS

### Determination of Mₙ and M_{w}

The number-average (Mₙ) and weight-average (M_{w}) molecular weights and the molecular weight distribution are determined according to DIN 55672-1:2007-08 at 40°C using a high-pressure liquid chromatography pump (WATERS 600 HPLC pump) and a refractive index detector (Waters 410). As separating columns, a combination was used of 3 Styragel columns from WATERS with a size of 300 mm x 7.8 mm ID/column, a particle size of 5 µm, and pore sizes HR4, HR2 and HR1. The eluent used was tetrahydrofuran with 1% by volume of dibutylamine, with an elution rate of 1 ml/min. The conventional calibration was carried out using polystyrene standards.

### Amine number

The amine number (i.e. the amine value) is determined by the titration method according to DIN 16945:1989-03.

### EXAMPLES

The following examples further illustrate the invention but are not to be construed as limiting its scope.

### 1. Raw materials:

| | |
|---|---|
| MMA: | methyl methacrylate (manufacturer: Evonik) |
| BMA: | n-butyl methacrylate (manufacturer: Evonik) |
| CHMA: | cyclohexyl methacrylate (manufacturer: Evonik) |
| BzMA: | benzyl methacrylate (manufacturer: Evonik) |
| EHMA: | 2-ethylhexyl methacrylate (manufacturer: Evonik) |
| 3EOMA: | ethyltriglycol methacrylate (manufacturer: Evonik) |
| MPEG550MA: | methoxy polyethylene glycol 550 methacrylate (manufacturer: Sartomer) |
| MPEG1000MA: | methoxy polyethylene glycol 1000 methacrylate (manufacturer: Shin-Nakamura Chemical) |
| DMAEMA: | N,N-dimethylaminoethyl methacrylate (manufacturer: Evonik) |
| Initiator: | 1-methoxy-1-(trimethylsiloxy)-2-methylpropene (purchased from Aldrich) |
| Catalyst: | tetrabutylammonium 3-chlorobenzoate (50% strength in acetonitrile, cf. US 4,588,795) |
| AMBN: | 2,2'-azodi(2-methylbutyronitrile) (manufacturer: Akzo Nobel) |
| AIBN: | 2,2'-azobisisobutyronitrile (purchased from Merck) |
| PMA: | 1-methoxy-2-propyl acetate (manufacturer: DOW Chemical) |
| Disperplast 1150: | ester of long chain alcohols with carboxylic acid groups |
| Disperbyk 111: | copolymer with acidic phosphoric acid ester groups |

All monomers as well as 1-methoxy-2-propyl acetate used as solvent are stored over 3 A molecular sieves for at least 48 hours prior to use.

### 2. Synthesis of Intermediate Polymers

### 2.1 General instructions for preparing Intermediate Polymers I-1 to I-14 by GTP as outlined in Table 1

70 g of 1-methoxy-2-propyl acetate are weighed into a water-free reaction vessel. "Monomer 1" or "monomer mixture 1" is metered in at a rate of 1.3g/min. Immediately after the start of the metering, the respective amount of initiator and 10%wt of the catalyst, in respect to the amount of initiator, are introduced into the reaction vessel. The reaction temperature is 20°C. After the end of the metering of the first monomer mixture, "monomer 2" or "monomer mixture 2" is metered in at a rate of 1.3 g/min. The subsequent reaction time after the end of the metering of the second monomer or second monomer mixture is 60 minutes. Afterwards 2.7 g of 2-methoxypropanol are added in order to stop the reaction. The solids content is adjusted to 40 wt.-% or 60 wt.-%, respectively, by addition of the required amount of 1-methoxy-2-propyl acetate. The solids content can be determined according to DIN EN ISO 3251:2008-06 at 150°C for 20 min.

### 2.2 General instructions for the partial quaternization of Intermediate polymers I-1 to I-14 for preparation of dispersants D1 to D33 as outlined in Tables 2 and 3

100 g of the respective intermediate polymer solution is mixed with the required amount of solvent and the respective amount or amounts of one or more quaternization agents (Benzyl chloride, Grilonit RV 1814 (i.e. a C₁₃/C₁₅-alkyl glycidyl ether), glycidyl methacrylate, alpha-pinene epoxide and/or the commercial product Vikolox 10 (i.e. 1,2-decene epoxide)) - as depicted in Tables 2 and 3 - is/are added. In case of epoxy-functional quaternization agents (Grilonit RV 1814 and glycidyl methacrylate), an equimolar amount of benzoic acid with respect to the epoxy equivalent of the quaternization agent - as determined via titration according to DIN EN ISO 3001:1999-11 - is added to the reaction mixture, as also depicted in Tables 2 and 3. The resulting mixture is heated up to 120°C for 4 hours in each case.

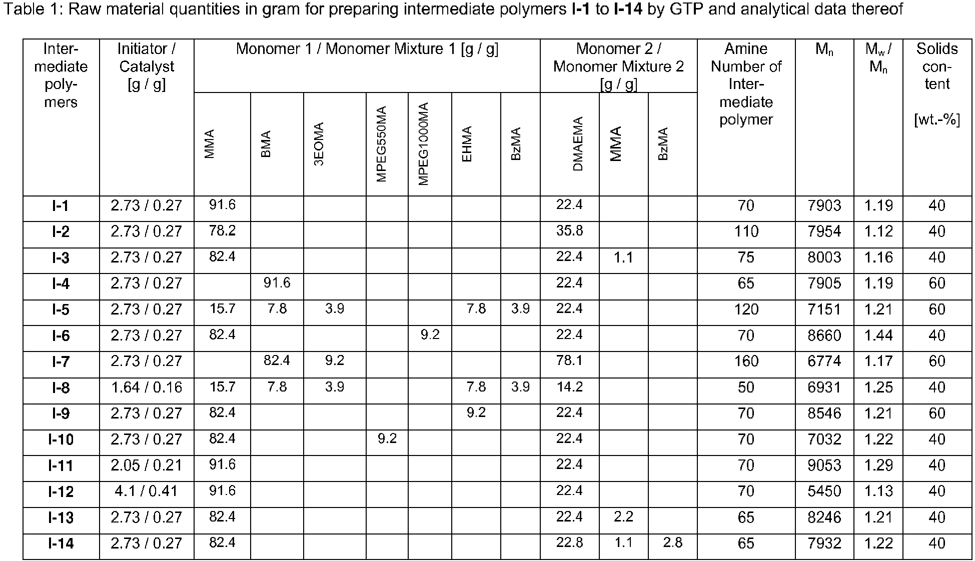

**Table 2: Raw materials quantities for preparing dispersants D1 to D23 by quaternization and amine numbers thereof**

| Wetting Agent / Dispersant | Intermediate Polymer | Quaternization agents | | | Solvent | | | Analytical data | |
|---|---|---|---|---|---|---|---|---|---|
| | | Benzyl Chloride | Vikolox 10 / Benzoic acid | Cresyl-glycidylether / Benzoic acid | Butyl glycol | PMA | PM | Amine Number of Wetting agent/Dispersant | Solid content [wt.-%] |
| | | all components in g/100g intermediate polymer solution | | | | | | | |
| **D1** | I-1 | 5.45 | | | | 10.4 | 4.0 | 14 | 40 |
| **D2** | I-1 | 5.78 | | | | 38.5 | 8.6 | 11 | 30 |
| **D3** | I-1 | 4.68 | 1.81 / 1.40 | | 9.1 | 5.7 | | 15 | 41 |
| **D4** | I-1 | 2.86 | 3.59 / 2.80 | | 9.5 | 5.4 | | 12 | 40 |
| **D5** | I-2 | 6.68 | | | 12.0 | 2.2 | | 34 | 40 |
| **D6** | I-3 | 5.21 | | | 6.7 | 3.2 | | 18 | 40 |
| **D7** | I-3 | | 3.60 / 2.80 | | | 5.2 | 6.9 | 36 | 40 |
| **D8** | I-4 | 5.23 | | | | 14.4 | 47.4 | 25 | 40 |
| **D9** | I-4 | 1.68 | 1.77 / 1.39 | | | 2.2 | 1.7 | 35 | 61 |
| **D10*** | I-5 | 8.36 | | | 12.1 | 6.2 | | 52 | 61 |
| **D11*** | I-5 | | | 10.61 / 7.47 | 43.4 | 19.8 | | 69 | 43 |
| **D12** | I-5 | 14.25 | | | 33.2 | 21.7 | | 10 | 41 |
| **D13** | I-5 | 7.25 | | | 12.7 | 6.6 | | 45 | 60 |
| **D14** | I-6 | 4.66 | 1.77 / 1.39 | | | 4.1 | 4.4 | 9 | 41 |
| **D15** | I-6 | 5.61 | | | 4.1 | 1.4 | | 11 | 40 |
| **D16** | 1-7 | 19.45 | | | 35.2 | 15.1 | | 18 | 60 |
| **D17** | I-8 | 1.50 | | | | | | 32 | 41 |
| **D18** | I-9 | 2.15 | | 2.07 / 1.52 | | 2.8 | 5.9 | 33 | 60 |
| **D19** | I-10 | 3.96 | | | 7.0 | 2.8 | | 21 | 40 |
| **D20** | I-11 | 4.78 | | | 6.5 | 3.2 | | 17 | 41 |
| **D21** | I-12 | 5.86 | | | 6.6 | 7.1 | | 6 | 40 |
| **D22** | I-13 | | | 7.40/5.43 | | 5.7 | 12.1 | 5 | 40 |
| **D23** | I-14 | 5.23 | | | 5.9 | 4.7 | | 7 | 40 |

| | | | | | | | | | |
|---|---|---|---|---|---|---|---|---|---|
| The dispersants marked with an asterix (*) are not according to invention, i.e. are comparative dispersants. | | | | | | | | | |

**Table 3: Raw materials quantities for preparing dispersants D24 to D33 and amine numbers thereof**

| Wetting Agent / Dispersant | Quaternization agents | Intermediate Polymer | | | | | Solvent | | Analytical data | |
|---|---|---|---|---|---|---|---|---|---|---|
| | | I-1 | I-2 | I-7 | I-8 | I-13 | Butyl glycol | PMA | Amine Number of Wetting agent/Dispersant | Solid content [wt.-%] |
| | | all components in g/100g intermediate polymer solution | | | | | | | | |
| **D24** | Cresylglycidyl ether / lactic acid | | 11.50 / 6.32 | | | | 11.2 | 12.9 | 13 | 40 |
| **D25** | Cresylglycidyl ether / toluenesulfonic acid | 7.35/ 7.70 | | | | | 9.0 | 13.8 | 7 | 40 |
| **D26** | Cresylglycidyl ether / Disperbyk 111 | | | | | 6.8 / 33.3 | 14.1 | 19.2 | 6 | 40 |
| **D27** | Grilonit RV 1814 / Disperplast 1150 | 7.07 / 14.95 | | | | | | 28.8 | 37 | 40 |
| **D28*** | Grilonit RV 1814 / perchloric acid | | | 24.30 / 8.60 | | | | 37.1 | 78 | 60 |
| **D29** | Grilonit RV 1814 / tall oil fatty acid | 7.05 / 7.03 | | | | | | 21.5 | 35 | 40 |
| **D30** | Grilonit RV 1814 / Disperbyk 111 | | | | 5.03 / 14.21 | | | 23.5 | 23 | 40 |
| **D31** | Grilonit RV 1814 / perchloric acid | | | 43.68 / 15.41 | | | | 47.7 | 20 | 61 |
| **D32** | Grilonit RV 1814 / lactic acid | | | | | 6.55/ 2.09 | | 19.4 | 29 | 40 |
| **D33** | Grilonit RV 1814 / perchloric acid | | | 43.68 / 15.41 | | | | 47.7 | 20 | 61 |

| | | | | | | | | | | |
|---|---|---|---|---|---|---|---|---|---|---|
| The dispersants marked with an asterix (*) are not according to invention, i.e. are comparative dispersants. | | | | | | | | | | |

### 3. Preparation of alkali-soluble resins

### 3.1 Preparation of alkali-soluble resin R1:

300 g of 1-methoxy-2-propyl acetate are weighed into a reaction vessel. 137 g of BzMA, 34 g of methacrylic acid and 1.65 g of AMBN are metered in at a temperature of 120°C over a period of 180 minutes. The subsequent reaction time after the end of the metering is 120 minutes. The solids content is then adjusted to 35 wt.-% with 1-methoxy-2-propyl acetate. The solids content can be determined according to DIN EN ISO 3251:2008-06 at 150°C for 20 min.

### 3.2 Preparation of alkali-soluble resin R2:

239 g of 1-methoxy-2-propyl acetate are weighed out into a reaction vessel. 132 g of BzMA and 27.5 g of methacrylic acid and 7.98 g of AIBN are metered in at a temperature of 90°C over a period of 300 minutes. The subsequent reaction time after the end of the metering is 120 minutes. The solids content is then adjusted to 37 wt.-% with 1-methoxy-2-propyl acetate. The solids content can be determined according to DIN EN ISO 3251:2008-06 at 150°C for 20 min.

### 3.3 Preparation of alkali-soluble resin R3:

300 g of 1-methoxy-2-propyl acetate are weighed out into a reaction vessel. 132 g of BzMA, 13.75 g of 2-hydroxyethyl methacrylate, 34.2 g of methacrylic acid and 1.65 g of AMBN are metered in at a temperature of 120°C over a period of 180 minutes. The subsequent reaction time after the end of the metering is 120 minutes. The solids content is then adjusted to 35 wt.-% with 1-methoxy-2-propyl acetate. The solids content can be determined according to DIN EN ISO 3251:2008-06 at 150°C for 20 min.

### 4. Preparation of the pigment dispersions

Pigments used:

| | |
|---|---|
| PG 58 | Fastogen Green A110 (manufacturer: DIC) |
| PY 150 | Hostaperm Yellow H4GN (manufacturer: Clariant) |
| PR 254 | Irgaphore red BTCF, Irgaphor^{®} Red S 3611 CF (manufacturer: BASF) |
| PB 15:6 | Fastogen Blue EP-169 (manufacturer: DIC) |
| PV 23 | Fastogen Super Violet RN-F (manufacturer: DIC) |

### 4.1 Pigment dispersions based on PD1 (green)

4.41 g of alkali-soluble resin **R1,** 30 g of 1-methoxy-2-propyl acetate, 2.5 g of n-butanol, 2.25 g of one wetting agent/dispersant selected from **D1** to **D33** as per Table 2 or 3 or selected from one of Intermediate Polymers **I1** to **114** as per Table 1 (30 wt.-% solid wetting agent/dispersant based on pigment content), 4.3 g PG 58, and 3.20 g PY 150 were put together in a glass bottle. The solids content is then adjusted to 20 wt.-% with 1-methoxy-2-propyl acetate. 100 g of Zirconox beads (diameter 0.4 - 0.6 mm) were added. The dispersion process is performed in a LAU-Disperser DAS 200 over a period of 5 hours at 40°C.

### 4.2 Pigment dispersions based on PD2 (red)

4.41 g of alkali-soluble resin **R1,** 30 g of 1-methoxy-2-propyl acetate, 2.5 g of n-butanol, 2.25 g of one wetting agent/dispersant selected from **D1** to **D33** as per Table 2 or 3 or selected from one of Intermediate Polymers **I1** to **114** as per Table 1 (30 wt.-% solid wetting agent/dispersant based on pigment content), and 7.5 g PR 254 were put together in a glass bottle. The solids content is then adjusted to 20 wt.-% with 1-methoxy-2-propyl acetate. 100 g of Zirconox beads (diameter 0.4 - 0.6 mm) were added. The dispersion process is performed in a LAU-Disperser DAS 200 over a period of 5 hours at 40°C.

### 4.3 Pigment dispersions based on PD3 (blue)

4.41 g of alkali-soluble resin **R2,** 30 g of 1-methoxy-2-propyl acetate, 2.5 g of n-butanol, 2.25 g of one wetting agent/dispersant selected from **D1** to **D33** as per Table 2 or 3 or selected from one of Intermediate Polymers **I1** to **114** as per Table 1 (30 wt.-% solid wetting agent/dispersant based on pigment content), 4.3 g PB 15:6 and 3.2 g PV 23 were put together in a glass bottle. The solids content is then adjusted to 20 wt.-% with 1-methoxy-2-propyl acetate. 100 g of Zirconox beads (diameter 0.4 - 0.6 mm) were added. The dispersion process is performed in a LAU-Disperser DAS 200 over a period of 5 hours at 40°C.

### 5. Viscosity measurements

The viscosities of the pigment dispersions based on **PD1, PD2** or **PD3** as depicted below in Tables 4a, 4b and 4c are measured after grinding by the means of an Anton-Paar Rheometer using the CP50-1 measurement system at 25°C according to DIN 53019-1:2008-09. After one week of storage at 40°C the viscosity is measured again. In Tables 4a, 4b and 4c "viscosity 1" is the viscosity measured after grinding and "viscosity 2" the viscosity measured after storage for 7 days at 40°C.

**Table 4a: Viscosity results of PD1 based pigment dispersions**

| Pigment dispersion | Intermediate Polymer or Wetting Agent / Dispersant used for preparation of **PD1** | Viscosity 1 [mPa*s] | Viscosity 2 [mPa*s] |
|---|---|---|---|
| **PD1** | **I-1*** | 23.1 | 35.4 |
| | **I-2*** | 14.8 | 29.2 |
| | **I-3*** | 19.6 | 26.5 |
| | **D1** | 11.3 | 13.1 |
| | **D3** | 10.9 | 10.6 |
| | **D5** | 9.6 | 9.5 |
| | **D14** | 9.2 | 9.7 |
| | **D25** | 12.4 | 10.2 |
| | **D29** | 12.7 | 12.9 |

| | | | |
|---|---|---|---|
| Comparative examples are marked with an asterix (*) | | | |

**Table 4b: Viscosity results of PD2 based pigment dispersions**

| Pigment dispersion | Intermediate Polymer or Wetting Agent / Dispersant used for preparation of **PD2** | Viscosity 1 [mPa*s] | Viscosity 2 [mPa*s] |
|---|---|---|---|
| **PD2** | **D10*** | 13.3 | 21.2 |
| | **D11*** | 15.9 | 18.3 |
| | **I-5*** | 24.2 | 66.1 |
| | **D12** | 8.9 | 9.4 |
| | **D13** | 11.6 | 12.6 |
| | **I-8*** | 17.0 | 19.5 |
| | **D17** | 9.1 | 9.3 |

| | | | |
|---|---|---|---|
| Comparative examples are marked with an asterix (*) | | | |

**Table 4c: Viscosity results of PD3 based pigment dispersions**

| Pigment dispersion | Intermediate Polymer or Wetting Agent / Dispersant used for preparation of **PD3** | Viscosity 1 [mPa*s] | Viscosity 2 [mPa*s] |
|---|---|---|---|
| **PD3** | **I-7*** | 56.1 | Solid |
| | **D15** | 10.2 | 10.3 |
| | **D19** | 12.2 | 15.6 |
| | **D28*** | 36.1 | 223.4 |
| | **D31** | 12.0 | 12.4 |
| | **D33** | 13.1 | 13.7 |

| | | | |
|---|---|---|---|
| Comparative examples are marked with an asterix (*) | | | |

As can be derived from Tables 4a to 4c the incorporation of intermediate polymers such as **I-1, I-2, I-3, I-5, I-7** und **I-8** having no quaternized amino groups into pigment dispersions **PD1, PD2** and **PD3** leads to a significantly higher viscosity (which is undesired) than inventive pigment dispersions containing an inventively used diblock copolymer bearing such quaternized amino groups such as **D1, D3, D5, D12** to **D14, D17, D19, D25, D29, D31** and **D33.**

Further, as can be derived from Tables 4a to 4c, the incorporation of diblock copolymers having quaternized amino groups but having an amine number >48 (such as e.g. in case of **D10,** which has an amine number of 52) into pigment dispersions **PD1, PD2** and **PD3** leads to a significantly higher viscosity (which is undesired) than inventive pigment dispersions containing an inventively used diblock copolymer having a lower amine number ≤ 48 (such as e.g. in case of **D13,** which has an amine number of 45).

### 6. Preparation of color filter photoresist formulations PR1, viscosity measurements thereof and testing of its developing properties

40 g of a pigment dispersion **PD1,** 13.5 g of the alkali-soluble resin **R3,** 5 g of dipentaerythritol penta-/hexaacrylate (Sigma Aldrich), 1.0 g of Irgacure 369 (BASF) and 0.1 g Flurorad FC4432 (3M) were mixed with 40.4 g of 1-methoxy-2-propyl acetate. This mixture was homogenized using a dissolver *Dispermat LC 55* equipped with a tooth plate at 1.0 - 1.5m/s for one hour in the dark. As pigment dispersion **PD1** a number of pigment dispersions containing different wetting agents/dispersant as displayed in Table 5 have been used. Thus, a number of different color filter photoresist formulations **PR1** are obtained as also displayed in Table 5.

The viscosities of the different resulting photoresist formulations **PR1** are measured after grinding by the means of an Anton-Paar Rheometer using the CP50-1 measurement system at 25°C according to DIN 53019-1:2008-09. After one week of storage at 40°C the viscosity is measured again. "Viscosity 1" is the viscosity measured after grinding and "Viscosity 2" the viscosity measured after storage for 7 days at 40°C. The results are displayed in Table 5.

For determination of the developing properties, the different resulting photoresist formulations **PR1** as depicted below in Table 5 are applied by means of a spin-coater on a 100 mm x 100 mm glass plate. Prior to application, the glass plate was intensively cleaned with ethyl acetate. The applied films were dried for 90 s at 80°C in an oven. The applied film thickness was 1 µm (dry film thickness). The film thickness was adjusted by the rotation speed of the spin-coater. After additional 4 minutes at room temperature (21°C) the coated glass plates were put into a beaker with a 0.5 wt.-% aqueous potassium hydroxide solution, in a way that half of the glass plate was immersed into said KOH solution. After an immersion time of 30 s the film was wiped with a rubber glove protected finger for 5 s. This was repeated every 30 s until the film started to dissolve. The time until the film got dissolved and the amount of dissolved film was evaluated in grades from 1 (no dissolving of the film) to 6 (very good dissolving of the film; undesired). The results are displayed in Table 5.

**Table 5:**

| Intermediate Polymer or Wetting Agent / Dispersant contained in **PD1,** which in turn is contained in **PR1** | Viscosity 1 [mPa*s] | Viscosity 2 [mPa*s] | Developing test |
|---|---|---|---|
| **I-1*** | 19.8 | 29.4 | 6 |
| **I-2*** | 16.3 | 25.9 | 6 |
| **I-3*** | 16.6 | 21.5 | 6 |
| **D1** | 9.8 | 10.2 | 3 |
| **D3** | 11.5 | 11.6 | 4 |
| **D13** | 10.4 | 10.9 | 3 |
| **D26** | 13.9 | 13.6 | 1 |
| **D30** | 13.1 | 12.6 | 3 |

| | | | |
|---|---|---|---|
| Comparative examples are marked with an asterix (*) | | | |

As can be derived from Table 5 the incorporation of intermediate polymers such as **I-1, I-2** and **I-3** having no quaternized amino groups into pigment dispersions **PD1** which in turn are used for the preparation of different **PR1** formulations lead to a significantly higher viscosity (which is undesired) than inventive pigment dispersions containing an inventively used diblock copolymer bearing such quaternized amino groups such as **D1, D3, D13, D26** and **D30.** Further, the developing test showed that the **PR1** formulations containing intermediate polymers such as **I-1, I-2** and **I-3** having no quaternized amino groups were readily dissolved, whereas this undesired behavior could not be observed in case of the inventive formulations.

## Claims

1. A composition comprising
at least one wetting and/or dispersing agent (A),
at least one colorant (B) and
at least one organic solvent (C),
said at least one wetting and/or dispersing agent (A) being a diblock copolymer,
wherein the first block of the diblock copolymer consists of one or more identical or different repeating units 1 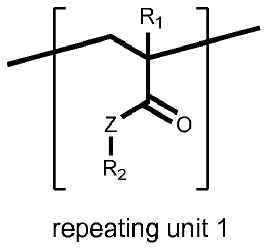 and
wherein the second block comprises
i) one or more identical or different repeating units 2, and
ii) one or more identical or different repeating units 3 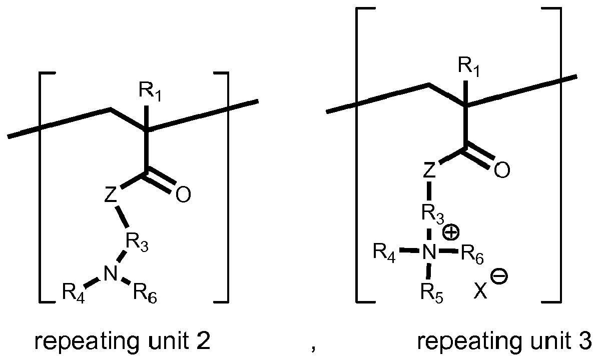
and iii) optionally up to 40 weight-% of repeating units 1, based on the total weight of repeating units in the second block,
wherein
Z is O or NH,
R₁ is H or CH₃,
R₂ is a monoether or polyether radical, a linear or branched alkyl, cycloalkyl, aryl or aralkyl,
R₃ is a linear hydrocarbon chain with 2 to 4 carbon atoms, the linear hydrocarbon chain optionally being interrupted by one or more oxygen atoms and/or having a hydroxyl group attached to the hydrocarbon chain,
R₄ and R₆ independently of one another represent a linear, branched or cyclic, saturated or unsaturated aliphatic group, optionally containing tertiary amino groups and/or hydroxyl groups; an aromatic group; or an araliphatic group; or R₄, R₆ and the nitrogen atom to which both groups are bound form a saturated or unsaturated heterocyclic ring, optionally further containing one or more heteroatoms selected from oxygen and nitrogen as ring atoms,
R₅ is a linear, branched or cyclic, saturated or unsaturated aliphatic group or an araliphatic group, wherein these before-mentioned groups optionally contain one or more hydroxyl groups, one or more ether oxygens and/or one or more ester groups;
X^{θ} is an acid anion,
and residues R₁, R₂, R₃, R₄, R₅, R₆, Z and X^{θ} are each independently of one another identical or different for repeating units 1, 2, and 3,
**characterized in that** the amine number of the diblock copolymer is in the range of from 0.1 to 48.0 mg KOH/g copolymer, and **in that** the relative weight ratio of the first block consisting of repeating units 1 to the second block comprising at least repeating units 2 and repeating units 3 and, if present, repeating units 1, is in the range of from 90:10 to 50:50 and **in that** the diblock copolymer has a weight average molecular weight M_{w} in the range of from 5,000 to 15,000.

2. The composition according to claim 1, **characterized in that** the amine number of the diblock copolymer is in the range of from 0.9 to 48.0 mg KOH/g copolymer.

3. The composition according to claim 1 or 2, **characterized in that** the diblock copolymer has a polydispersity in the range of from >1.0 to 1.67.

4. The composition according to any of the preceding claims, **characterized in that** the relative weight ratio of repeating units 2 to repeating units 3 within the second block of the diblock copolymer is in the range of from 1:2.2 to 1: 250.

5. The composition according to any of the preceding claims, **characterized in that** R₂ represents an unbranched alkyl residue with 1 to 12 carbon atoms, a branched alkyl residue with 3 to 12 carbon atoms, a cycloalkyl residue with 4 to 8 carbon atoms, an araliphatic residue with 7 to 12 carbon atoms, an aryl residue with 6 to 12 carbon atoms, or denotes -(RₐO)ₙR_{b}, wherein Rₐ is a linear or branched alkylene group with 2 to 6 carbon atoms, R_{b} is aralkyl, aryl or alkyl with 1 to 8 carbon atoms; and n is 2 to 50.

6. The composition according to any of the preceding claims, **characterized in that** R₅ is an unbranched aliphatic group with 1 to 12 carbon atoms, a branched aliphatic group with 3 to 12 carbon atoms, a cycloaliphatic group with 4 to 8 carbon atoms, an araliphatic group with 7 to 12 carbon atoms, or an aryl group with 6 to 12 carbon atoms, wherein each of these groups may be substituted or unsubstituted and may contain at least one hydroxyl group, at least one ether group and/or at least one ester group.

7. The composition according to any of the preceding claims, **characterized in that** R₁ is CH₃, R₃ is CH₂CH₂, R₄ and R₆ are each CH₃, R₅ is CH₂Ph, and Z = O.

8. The composition according to any of the preceding claims, **characterized in that** the at least one colorant (B) is selected from the group consisting of pigments, dyes and mixtures thereof.

9. The composition according to any of the preceding claims, **characterized in that** the at least one organic solvent is selected from the group consisting of solvents having a boiling point at 101.325 kPa in the range from 100 to 300 °C.

10. The composition according to any of the preceding claims, **characterized in that** the composition further comprises at least one alkali-soluble resin (D).

11. The composition according to any of the preceding claims, **characterized in that** the composition further comprises at least one alkali-soluble resin (D), which is
(a) a copolymer of (meth)acrylic acid and/or maleic anhydride with one or more ethylenically unsaturated monomers differing from (meth)acrylic acid and/or maleic anhydride and/or
(b) a reaction product of an ethylenically unsaturated monocarboxylic acid or its ester with an epoxy resin and a carboxylic acid anhydride.

12. The composition according to any of the preceding claims, **characterized in that** the composition further comprises at least one multifunctional ethylenically unsaturated monomer (E), which in turn comprises at least one ethylenically unsaturated group and at least one further functional group selected from ethylenically unsaturated groups, hydroxyl groups and carboxyl groups.

13. The composition according to any of the preceding claims, **characterized in that** the composition is a composition for the preparation of color filters.

14. The composition according to claim 13, **characterized in that** the color filters are for liquid-crystal displays, liquid crystal screens, color resolution devices or sensors.

15. A wetting and/or dispersing agent, which is a diblock copolymer (A) as defined in any of claims 1 to 7.
